# EUROPÄISCHE PATENTSCHRIFT

(11) **EP 3 096 449 B1**
(45) Veröffentlichungstag und Bekanntmachung des Hinweises auf die Patenterteilung: **08.01.2020**
(21) Anmeldenummer: 15305762.5
(22) Anmeldetag: 20.05.2015
(51) Int. Cl.: H02P 23/00, H04L 29/08

(54) **KOMMUNIKATIONSVERFAHREN**
COMMUNICATION METHOD
PROCEDE DE COMMUNICATION

(43) Veröffentlichungstag der Anmeldung: 23.11.2016
(73) Patentinhaber: Schneider Electric Industries SAS, 92500 Rueil-Malmaison (FR)
(72) Erfinder: Berner, Ralf, 88074 Meckenbeuren (DE)
(74) Vertreter: Manitz Finsterwald Patent- und Rechtsanwaltspartnerschaft mbB

(56) Entgegenhaltungen:
- WO-A1-2013/184115
- US-A1- 2010 052 592
- US-A1- 2013 080 585
- US-A1- 2014 292 247

## Beschreibung

Die vorliegende Erfindung betrifft ein Verfahren zur Kommunikation zwischen einer speicherprogrammierbaren Steuerung (SPS) und einer Aktorsteuerung, welche zum Betreiben eines Aktors ausgebildet ist, wobei die SPS und die Aktorsteuerung mittels einer ersten Leitung und einer zweiten Leitung elektrisch miteinander verbunden sind. Bei dem Verfahren werden ein erstes digitales Signal über die erste Leitung und ein zweites digitales Signal über die zweite Leitung von der SPS zu der Aktorsteuerung übertragen, wobei die digitalen Signale zumindest jeweils einen ersten und einen zweiten Zustand aufweisen. Dabei wird mittels eines Zustands des ersten digitalen Signals eine Bewegungsrichtung des Aktors festgelegt und mittels einer Zustandsänderung des zweiten digitalen Signals eine, insbesondere inkrementelle, Bewegung des Aktors in der Bewegungsrichtung angeordnet.

Ein derartiges Verfahren zur Kommunikation zwischen einer SPS und einer Aktorsteuerung ist grundsätzlich bekannt, wobei eine Schnittstelle zwischen der SPS und der Aktorsteuerung, die ein solches Verfahren ermöglicht, als Pulse-Train-Schnittstelle oder als Pulse-Direction-Interface bezeichnet wird. Eine solche Schnittstelle wird üblicherweise bei kostengünstigen Aktorsteuerungen verwendet, die beispielsweise keinen Feldbusanschluss besitzen.

Mittels der SPS kann über die erste und die zweite Leitung der an die Aktorsteuerung angeschlossene Aktor gesteuert werden, wobei es sich bei dem Aktor beispielsweise um einen Elektromotor handeln kann. Zur Steuerung des Elektromotors wird mittels des ersten digitalen Signals eine Bewegungsrichtung festgelegt. Das erste digitale Signal kann dabei als "Direction -Signal" bezeichnet werden. Eine logische Eins des ersten digitalen Signals kann z.B. eine Drehung des Elektromotors im Uhrzeigersinn und eine logische Null eine Drehung entgegen dem Uhrzeigersinn bewirken. Solange also eine Drehung des Elektromotors im Uhrzeigersinn gewünscht ist, wird das erste digitale Signal von der SPS auf einer logischen Eins gehalten.

Um eine Drehgeschwindigkeit des Elektromotors zu kontrollieren, werden mittels des zweiten digitalen Signals (des sogenannten "Puls-Signals") von der SPS kurze digitale Pulse an die Aktorsteuerung übermittelt. Ein digitaler Puls kann eine steigende Flanke gefolgt von einer fallenden Flanke umfassen. Für jeden empfangenen Puls kann die Aktorsteuerung den Elektromotor zu einer Drehung veranlassen. Beispielsweise kann ein einzelner Puls einer Tausendstel Umdrehung entsprechen. Dies bedeutet, dass nach eintausend Pulsen sich der Elektromotor einmal gedreht hat. Wird mit dem zweiten digitalen Signal eine Pulsfolge mit einer Frequenz von 10 kHz an die Aktorsteuerung übermittelt, so führt dies in dem genannten Beispiel zu einer Umdrehungsgeschwindigkeit des Elektromotors von zehn Umdrehungen pro Sekunde (600 Umdrehungen pro Minute).

Das bekannte Verfahren zur Kommunikation zwischen der SPS und einer Aktorsteuerung dient also dazu, mittels der ersten und der zweiten Leitung Steuerbefehle an die Aktorsteuerung zu übermitteln. Um aber einen von der SPS gesteuerten Betrieb der Aktorsteuerung überhaupt zu ermöglichen, muss vor dem Betrieb eine Konfiguration der Aktorsteuerung vorgenommen werden. Dies erfolgt üblicherweise derart, dass ein Konfigurationssystem (z.B. ein Konfigurations-PC) mittels einer separaten, d.h. weiteren, Schnittstelle mit der Aktorsteuerung verbunden wird und Konfigurationsdaten, wie z.B. Betriebsparameter, Verstärkungsfaktoren, maximale Motorströme und dergleichen an die Aktorsteuerung übermittelt. Das Konfigurationssystem muss zu diesem Zweck mit einer an die Aktorsteuerung angepassten Software (einem Konfigurations-Tool) ausgestattet sein, die sich üblicherweise von einer zur Konfiguration der SPS verwendeten Software unterscheidet.

Nachteiligerweise muss zur Konfiguration, insbesondere manuell, eine Datenverbindung zu der Aktorsteuerung hergestellt werden, um die Konfigurationsdaten an die Aktorsteuerung zu übertragen. Eine derartige Konfiguration ist aufwendig, zeitintensiv und damit teuer. Zudem muss die Verbindung zur Konfiguration erneut hergestellt werden, wenn die Konfigurationsdaten der Aktorsteuerung später geändert werden sollen. Dies kann insbesondere dann schwierig sein, wenn die Aktorsteuerung in Industriemaschinen und dergleichen verbaut ist und damit schwer zugänglich ist.

Die genannten Nachteile treten dabei insbesondere dann auf, wenn es sich bei der Aktorsteuerung um eine kostengünstige Aktorsteuerung mit geringer Ausstattung handelt, die beispielsweise keinen Feldbusanschluss aufweist, über den eine Übertragung der Konfigurationsdaten ohne eine zusätzliche Verbindung möglich wäre.

Die US 2014/292247 A1 lehrt die Steuerung eines Motors mittels mehrerer Signale, wobei ein Signal FREF zur Einstellung der Drehgeschwindigkeit des Motors führt und ein Da-Pin zur Festlegung der Bewegungsrichtung des Motors verwendet wird. Überdies lehrt die US 2014/292247 A1, Daten an ein EEPROM mittels eines I²C-Busses zu übermitteln.

Aus der US 2010/0052592 A1 ist eine elektrische Maschine bekannt, die beispielsweise mittels einer Pulsweitenmodulation gesteuert werden kann. Die WO 2013/184115 lehrt eine speicherprogrammierbare Steuerung, welche Feldgeräte mittels verschiedener Technologien ansteuert. Die US 2013/0080585 A1 betrifft die Übermittlung von Daten mittels des CANopen-Standards.

Es ist die der Erfindung zugrundeliegende Aufgabe, ein Verfahren zur Kommunikation zwischen einer SPS und einer Aktorsteuerung anzugeben, welches eine Konfiguration der Aktorsteuerung mit geringem Aufwand ermöglicht und welches insbesondere bei kostengünstigen Aktorsteuerungen einsetzbar ist.

Diese Aufgabe wird erfindungsgemäß durch ein Verfahren gemäß Anspruch 1 und insbesondere dadurch gelöst, dass mittels Zustandsänderungen des ersten digitalen Signals Konfigurationsdaten von der SPS an die Aktorsteuerung übertragen werden.

Durch die Erfindung wird die Pulse-Direction-Schnittstelle neben der Übertragung von Befehlen zur Bewegungssteuerung zusätzlich dazu verwendet, auch Konfigurationsdaten an die Aktorsteuerung zu übertragen. Hierzu nutzt die Erfindung die Erkenntnis aus, dass eine Änderung des Zustands des ersten digitalen Signals nicht notwendigerweise eine Aktion des Aktors auslöst, wodurch sich die Möglichkeit ergibt, durch Zustandsänderungen des ersten digitalen Signals Konfigurationsdaten zu übertragen.

Die Übertragung der Konfigurationsdaten erlaubt die Konfiguration bzw. Parametrierung der Aktorsteuerung mittels der speicherprogrammierbaren Steuerung. Hierbei ergibt sich der Vorteil, dass die Aktorsteuerung keinen separaten Anschluss zum Empfang der Konfigurationsdaten aufweisen muss. Zudem kann ein separates Konfigurations-Tool zur Konfiguration der Aktorsteuerung eingespart werden. Die SPS und die Aktorsteuerung können also mit demselben Konfigurations-Tool konfiguriert werden. Bei der SPS kann es sich insbesondere um einen Motion Controller handeln, also eine Einheit zur Bewegungssteuerung.

Durch die Erfindung wird es ermöglicht, Konfigurationsdaten auch an kostengünstige Aktorsteuerungen zu übertragen, ohne einen direkten Zugriff auf die Aktorsteuerung zu benötigen. Der Aufwand zur Konfigurierung der Aktorsteuerung kann dadurch drastisch minimiert werden, da die Konfigurierung der Aktorsteuerung dann zusammen mit der Konfigurierung der speicherprogrammierbaren Steuerung vorgenommen werden kann. Eine separate Konfigurierung der Aktorsteuerung kann folglich entfallen.

Vorteilhafte Ausführungsformen der Erfindung sind der Beschreibung, den Zeichnungen sowie den Unteransprüchen zu entnehmen.

Gemäß einer ersten vorteilhaften Ausführungsform werden die Konfigurationsdaten dauerhaft in der Aktorsteuerung gespeichert. Dies bedeutet, dass die Konfigurationsdaten beispielsweise in einem Flash-Speicher der Aktorsteuerung abgelegt werden. Auf die Konfigurationsdaten kann somit mehrfach zugegriffen werden, wobei die Konfigurationsdaten auch bei einer Entfernung der Stromversorgung der Aktorsteuerung weiter gespeichert bleiben können.

Besonders bevorzugt werden mittels Zustandsänderungen des ersten digitalen Signals auch Konfigurationsdaten von der Aktorsteuerung an die SPS übertragen. Auf diese Weise wird eine bidirektionale Kommunikation zwischen der SPS und der Aktorsteuerung ermöglicht, wodurch beispielsweise auch Statusinformationen, Alarme und Fehlermeldungen der Aktorsteuerung von der SPS ausgelesen werden können. Zur bidirektionalen Kommunikation kann ein Master-Slave-Betrieb verwendet werden, wobei die SPS als Master und die Aktorsteuerung als Slave agieren kann.

Gemäß einer weiteren vorteilhaften Ausführungsform findet eine Datenübertragung nur statt, solange sich der Zustand des zweiten digitalen Signals nicht ändert. Die Datenübertragung mittels der ersten Leitung erfolgt also nur dann, wenn keine Pulsübertragung über die zweite Leitung erfolgt. Solange keine Pulsübertragung über die zweite Leitung erfolgt, wird keine Bewegung des Aktors angeordnet, d.h. der Aktor befindet sich üblicherweise im Stillstand. Auf diese Weise kann eine Fehlinterpretation der Zustandsänderungen des ersten digitalen Signals als sich ständig änderndes Richtungssignal für den Aktor vermieden werden.

Beispielsweise kann die Aktorsteuerung nach einer vorbestimmten Zeitdauer (z.B. 50 ms) nach dem Empfang der letzten Zustandsänderung des zweiten digitalen Signals in einen Datenempfangsmodus umschalten, in welchem ein Empfang der Konfigurationsdaten mittels der Zustandsänderung des ersten digitalen Signals ermöglicht wird. Sobald auf der zweiten Leitung eine Zustandsänderung des zweiten digitalen Signals erfasst wird (wodurch eine Bewegung des Aktors angeordnet wird), kann der Datenempfangsmodus verlassen und in einen Bewegungssteuerungsmodus zurückgekehrt werden, in welchem das erste digitale Signal die Bewegungsrichtung des Aktors festlegt.

Alternativ kann eine Datenübertragung der Konfigurationsdaten über die erste Leitung mittels hochfrequenter Signale mit einem Gleichtaktanteil erfolgen, so dass die Frequenzen zur Datenübertragung von dem Signal zur Bewegungssteuerung mittels eines Hochpasses getrennt werden können. Bei dem Gleichtaktanteil kann es sich um das erste digitale Signal handeln. Auf diese Weise kann eine Übertragung der Konfigurationsdaten auch während einer Bewegungssteuerung erfolgen.

Gemäß einer weiteren vorteilhaften Ausführungsform erfolgt die Datenübertragung ausschließlich über die erste Leitung. Die Konfigurationsdaten können also mittels einer Ein-Draht-Übertragung übermittelt werden. Für die erste Leitung kann beispielsweise die zweite Leitung als Referenzpotential dienen.

Besonders bevorzugt erfolgt die Datenübertragung mittels eines Halbduplexverfahrens und verwendet insbesondere das MODBUS-Protokoll. Die Verwendung des Halbduplexverfahrens vermeidet ein Vorsehen von Duplexern in der SPS und der Aktorsteuerung, wodurch die Übermittlung der Konfigurationsdaten auf einfache und kostengünstige Weise über eine Leitung erfolgen kann. Beispielsweise kann für die Übermittlung der Konfigurationsdaten eine bereits vorhandene serielle Schnittstelle, zum Beispiel eine EIA-232 oder eine EIA-485-Schnittstelle der SPS und der Aktorsteuerung verwendet werden.

Bevorzugt ist die SPS mit einem Netzwerk verbunden und ermöglicht eine Datenübertragung zwischen dem Netzwerk und der Aktorsteuerung. Die SPS kann somit als Gateway für die Aktorsteuerung dienen, wodurch die Aktorsteuerung über das Netzwerk erreichbar sein kann. Eine Konfiguration oder ein Setup der Aktorsteuerung kann somit über das Netzwerk vorgenommen werden.

Ebenfalls kann beispielsweise ein momentaner Status der Aktorsteuerung über das Netzwerk ausgelesen werden. Bei dem Netzwerk kann es sich um ein firmeninternes Intranet oder auch das Internet handeln. Es wird somit ermöglicht, auch kostengünstige Aktorsteuerungen in ein Intranet bzw. das Internet einzubinden. Auf diese Weise können auch solche kostengünstigen Aktorsteuerungen in voll vernetzte Produktionsabläufe integriert werden, wie dies nach dem Konzept der Industrie 4.0 und dem "Internet Of Things" (IOT) vorgesehen ist.

Die Erfindung betrifft weiterhin eine speicherprogrammierbare Steuerung (SPS) mit einer Schnittstelle für eine erste Leitung und eine zweite Leitung, wobei die SPS ausgebildet ist,
- ein erstes digitales Signal über die erste Leitung und ein zweites digitales Signal über die zweite Leitung zu übertragen, wobei die digitalen Signale jeweils zumindest einen ersten und einen zweiten Zustand aufweisen,
- mittels eines Zustands des ersten digitalen Signals eine Bewegungsrichtung eines Aktors festzulegen und
- mittels einer Zustandsänderung des zweiten digitalen Signals eine Bewegung des Aktors in der Bewegungsrichtung anzuordnen.

Die erfindungsgemäße speicherprogrammierbare Steuerung zeichnet sich dadurch aus, dass sie ferner ausgebildet ist, mittels Zustandsänderung des ersten digitalen Signals eine Datenübertragung von Konfigurationsdaten von der SPS an die Aktorsteuerung durchzuführen. Bei den Konfigurationsdaten kann es sich um Daten handeln, die in der Aktorsteuerung dauerhaft zu speichern sind.

In einer vorteilhaften Ausführungsform der speicherprogrammierbaren Steuerung umfasst die Schnittstelle zumindest zwei erste Leitungen und zwei zweite Leitungen. Mit der speicherprogrammierbaren Steuerung können also mehrere Aktorsteuerungen gesteuert werden. Beispielsweise kann die Schnittstelle vier erste Leitungen und vier zweite Leitungen umfassen, wodurch die SPS mit vier Aktorsteuerungen verbindbar ist.

Bevorzugt ist ein Multiplexer vorgesehen, mittels welchem eine Umschaltung zwischen einer Festlegung einer Bewegungsrichtung und einer Datenübertragung für die erste Leitung oder die ersten Leitungen erfolgt. Die SPS kann beispielsweise einen Mikrocontroller aufweisen, welcher eine einzelne serielle Schnittstelle umfasst. Zugleich kann der Mikrocontroller eine (Pulse-Direction-)Schnittstelle mit mehreren ersten und zweiten Leitungen aufweisen. Mittels des Multiplexers können die Konfigurationsdaten wahlweise über jede der ersten Leitungen übertragen werden. Somit kann mit dem Multiplexer zwischen der Übermittlung von Befehlen für eine Bewegungssteuerung und einer Datenübertragung von Konfigurationsdaten umgeschaltet werden.

Die Erfindung betrifft weiterhin eine Aktorsteuerung mit einer Schnittstelle für eine erste Leitung und eine zweite Leitung, wobei die Aktorsteuerung ausgebildet ist,
- ein erstes digitales Signal über die erste Leitung und ein zweites digitales Signal über die zweite Leitung zu empfangen, wobei die digitalen Signale jeweils zumindest einen ersten und einen zweiten Zustand aufweisen,
- anhand eines Zustands des ersten digitalen Signals eine Bewegungsrichtung eines Aktors festzulegen und
- anhand einer Zustandsänderung des zweiten digitalen Signals eine Bewegung des Aktors in der festgelegten Bewegungsrichtung vorzunehmen.

Die erfindungsgemäße Aktorsteuerung zeichnet sich dadurch aus, dass sie ferner ausgebildet ist,
- mittels Zustandsänderungen des ersten digitalen Signals Konfigurationsdaten zu empfangen.

In einer vorteilhaften Ausführungsform der Aktorsteuerung ist eine Filtereinheit vorgesehen, die eingerichtet ist, Signale für eine Bewegungsrichtung des Aktors und empfangene Konfigurationsdaten voneinander zu trennen.

Bevorzugt umfasst die Filtereinheit einen Hochpass- und/oder einen Multiplexer. Die Datenübertragung der Konfigurationsdaten erfordert üblicherweise Signale, welche eine höhere Frequenz aufweisen als das im Wesentlichen statische digitale Signal zur Festlegung der Bewegungsrichtung des Aktors. Auf diese Weise können mittels des Hochpasses die Konfigurationsdaten von den Befehlen zur Bewegungssteuerung getrennt werden. Alternativ oder zusätzlich kann ein Multiplexer vorgesehen sein, der beispielsweise auf einen Empfang von Konfigurationsdaten umschaltet, wenn längere Zeit auf der zweiten Leitung kein Signal, d.h. keine Zustandsänderung des zweiten digitalen Signals, empfangen wurde.

Anstelle einer Filtereinheit kann auch eine Verzweigung in der ersten Leitung vorgesehen sein, mittels welcher das erste digitale Signal sowohl einem Eingang zur Bewegungssteuerung der Aktorsteuerung als auch einem Kommunikationseingang der Aktorsteuerung zugeführt wird. Der Kommunikationseingang kann aktiviert ("enabled") sein, solange keine Zustandsänderung des zweiten digitalen Signals vorliegt. Ist der Kommunikationseingang nicht aktiviert, kann er in einen hochohmigen Zustand geschaltet sein, um die Übertragung von Befehlen zur Bewegungssteuerung auf der ersten Leitung nicht zu stören. Der Kommunikationseingang kann zu diesem Zweck in Tristate-Technologie ausgeführt sein.

Eine entsprechende Filtereinheit kann ebenfalls in der speicherprogrammierbaren Steuerung vorgesehen sein, um eine bidirektionale Kommunikation zwischen der Aktorsteuerung und der speicherprogrammierbaren Steuerung zu ermöglichen.

Gemäß einer Ausführungsform umfasst die Aktorsteuerung nur genau eine Datenschnittstelle, welche zum Empfang der Konfigurationsdaten geeignet ist. Die Aktorsteuerung umfasst in dieser Ausführungsform also keine weitere Datenschnittstelle und insbesondere keine Feldbusschnittstelle oder einen Ethernet-Anschluss.

Somit können die Konfigurationsdaten nur mittels der ersten Leitung an die Aktorsteuerung übertragen werden.

Die Aussagen zu dem erfindungsgemäßen Verfahren, insbesondere hinsichtlich Vorteilen und bevorzugten Ausführungsformen, gelten entsprechend auch für die erfindungsgemäße SPS und die erfindungsgemäße Aktorsteuerung.

Die Erfindung betrifft ferner ein Steuersystem, umfassend eine speicherprogrammierbare Steuerung und eine Aktorsteuerung. Das Steuersystem zeichnet sich dadurch aus, dass es ein Verfahren der vorstehend erläuterten Art durchführt.

Die Ausführungen zu dem erfindungsgemäßen Verfahren, der erfindungsgemäßen speicherprogrammierbaren Steuerung und der erfindungsgemäßen Aktorsteuerung gelten entsprechend für das erfindungsgemäße Steuersystem.

Nachfolgend wird die Erfindung rein beispielhaft unter Bezugnahme auf die Zeichnungen beschrieben. Es zeigen:
- Fig. 1: ein erfindungsgemäßes Steuersystem mit einer speicherprogrammierbaren Steuerung und einer Aktorsteuerung in schematischer Ansicht;
- Fig. 2: eine Bewegungssteuerung eines Aktors gemäß dem Stand der Technik mit einem ersten digitalen Signal und einem zweiten digitalen Signal; und
- Fig. 3: die Durchführung einer Konfiguration eines erfindungsgemäßen Steuersystems in schematischer Darstellung.

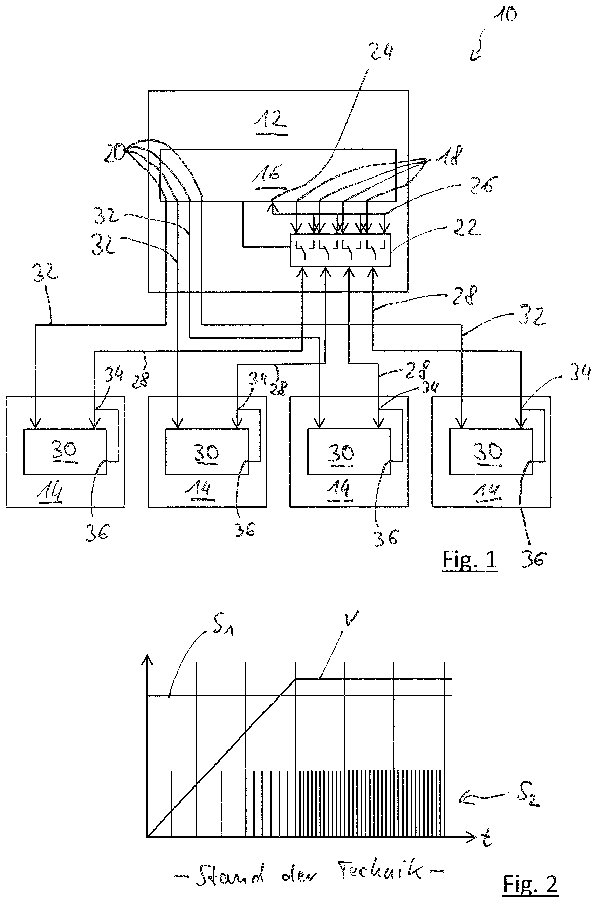

Fig. 1 zeigt ein Steuersystem 10, welches einen Motion Controller, der als speicherprogrammierbare Steuerung (SPS) 12 ausgebildet ist, und vier Aktorsteuerungen 14 umfasst. Die Aktorsteuerungen 14 sind eingerichtet (nicht gezeigte) Elektromotoren anzusteuern, wobei jeweils eine Aktorsteuerung 14 mit einem Elektromotor gekoppelt ist.

Die SPS 12 umfasst einen ersten Mikroprozessor 16, welcher vier erste Ausgänge 18 für elektrische erste digitale Signale S₁ (Fig. 2) aufweist. Der erste Mikroprozessor 16 umfasst zudem vier zweite Ausgänge 20, über welche elektrische zweite digitale Signale S₂ (Fig. 2) ausgegeben werden können.

Die ersten Ausgänge 18 sind mit einem Multiplexer 22 verbunden. Der Multiplexer 22 ist außerdem mit einer ersten seriellen Schnittstelle 24 des ersten Mikroprozessors 16 mittels einer Datenleitung 26 verbunden. Die Datenleitung 26 ist an vier Anschlüssen des Multiplexers 22 mit dem Multiplexer 22 gekoppelt.

Der Multiplexer 22 ist derart ausgebildet, dass jeweils ein erster Ausgang 18 oder die Datenleitung 26 an eine von vier ersten Leitungen 28 durchgeschaltet werden kann. Die ersten Leitungen 28 sind jeweils mit einem zweiten Mikroprozessor 30 der Aktorsteuerungen 14 elektrisch verbunden. Jede Aktorsteuerung 14 umfasst also einen zweiten Mikroprozessor 30, welcher mittels einer ersten Leitung 28 mit der SPS 12 gekoppelt ist.

Die ersten Leitungen 28 weisen jeweils eine Verzweigung 34 auf, mittels welcher das erste digitale Signal S₁ auch jeweils einer zweiten seriellen Schnittstelle 36 der zweiten Mikroprozessoren 30 zugeleitet wird.

Die zweiten Mikroprozessoren 30 sind zudem jeweils mittels einer zweiten Leitung 32 mit den zweiten Ausgängen 20 des ersten Mikroprozessors 16 gekoppelt.

Um eine Bewegungssteuerung der mit den Aktorsteuerungen 14 gekoppelten Elektromotoren durchzuführen, wird der Multiplexer 22 so geschaltet, dass die ersten Ausgänge 18 elektrisch mit den ersten Leitungen 28 verbunden sind. Die SPS 12 kann auf diese Weise jede Aktorsteuerung 14 unabhängig ansteuern.

Um beispielsweise einen an eine Aktorsteuerung 14 angeschlossenen Elektromotor mittels einer Beschleunigungsrampe zu beschleunigen und anschließend mit konstanter Drehzahl zu betreiben, können die in Fig. 2 gezeigten ersten und zweiten digitalen Signale S₁, S₂ verwendet werden. Fig. 2 zeigt den Verlauf der Signale S₁, S₂ über die Zeit t. Dabei wird das erste digitale Signal S₁ auf einen hohen Pegel (also eine logische Eins) gezogen, welcher dem ersten Zustand entspricht. Durch den hohen Pegel des ersten digitalen Signals S₁ wird die Aktorsteuerung 14 angewiesen, den Elektromotor im Uhrzeigersinn zu drehen. Während das erste digitale Signal S₁ auf dem hohen Pegel ist, wird das zweite digitale Signal S₂ wiederholt von einem niedrigen Pegel (also einer logischen Null) kurzzeitig auf einen hohen Pegel gezogen, um einen digitalen Puls zu erzeugen. Der niedrige Pegel entspricht dabei dem zweiten Zustand des digitalen Signals. Die Anzahl der Pulse des zweiten digitalen Signals S₂ pro Zeiteinheit gibt eine Drehgeschwindigkeit v des Elektromotors an. Wie in Fig. 2 gezeigt, steigt die Anzahl der Pulse pro Zeiteinheit des zweiten digitalen Signals S₂ zunächst an, wodurch die Drehgeschwindigkeit v linear ansteigt. Anschließend bleibt die Pulsanzahl des zweiten digitalen Signals S₂ pro Zeiteinheit konstant, was zu einer konstanten Drehgeschwindigkeit v führt.

Werden keine Pulse mittels des zweiten digitalen Signals S₂ übermittelt, so findet keine Drehung des Elektromotors statt. In einem solchen Zustand wird der Multiplexer 22 derart umgeschaltet, dass die erste serielle Schnittstelle 24 mit einer der ersten Leitungen 28 gekoppelt ist. Die erste serielle Schnittstelle 24 kann dann Konfigurationsdaten an eine zweite serielle Schnittstelle 36 und damit an eine der Aktorsteuerungen 14 übermitteln. Außerdem kann die Aktorsteuerung 14 mittels der zweiten seriellen Schnittstelle 36 Konfigurationsdaten, Statusmeldungen und dergleichen an die erste serielle Schnittstelle 24 übermitteln.

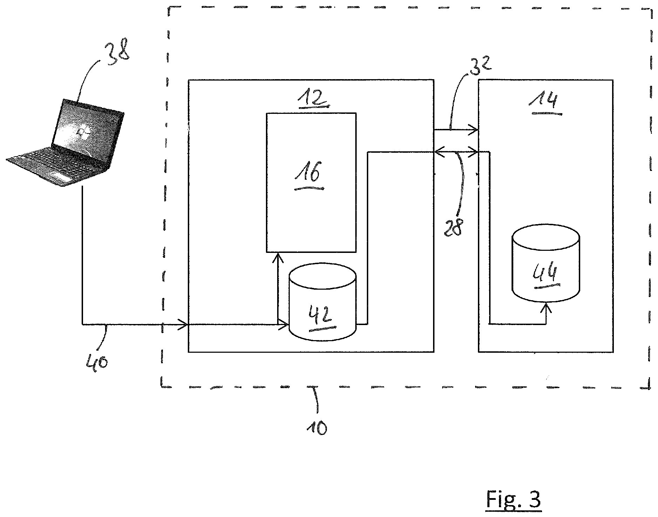

Eine solche Übertragung von Konfigurationsdaten kann für eine Konfiguration des Steuersystems 10 verwendet werden, wie sie in Fig. 3 gezeigt ist. Zur Konfiguration des Steuersystems kann ein Konfigurations-PC 38 beispielsweise mittels einer Feldbusschnittstelle 40 mit der SPS 12 gekoppelt werden. Mittels der Feldbusschnittstelle 40 kann der Konfigurations-PC 38 auf den ersten Mikroprozessor 16 und einen ersten Datenspeicher 42 der SPS 12 zugreifen. Der erste Datenspeicher 42 kann in den ersten Mikroprozessor 16 integriert sein.

Durch Übermittlung von Konfigurationsdaten von dem Konfigurations-PC 38 über die Feldbusschnittstelle 40 an den ersten Mikroprozessor 16 und den ersten Datenspeicher 42 kann eine Konfigurierung der SPS 12 erfolgen.

Zudem dient die SPS 12 als Gateway für die Aktorsteuerung 14 und leitet Konfigurationsdaten von dem Konfigurations-PC 38 mittels der ersten Leitung 28 (wie unter Bezugnahme auf Fig. 1 erläutert) an die Aktorsteuerung 14 weiter. Zudem kann die SPS 12 auch Daten von der Aktorsteuerung 14 an den Konfigurations-PC 38 übertragen.

Die an die Aktorsteuerung 14 übermittelten Konfigurationsdaten werden in einem zweiten Datenspeicher 44 in der Aktorsteuerung 14 dauerhaft gespeichert und beim Betrieb der Aktorsteuerung 14 verwendet. Der zweite Datenspeicher 44 kann Bestandteil des zweiten Mikroprozessors 30 (Fig. 1) sein. Bei den Konfigurationsdaten kann es sich beispielsweise um Verstärkungs- oder Regelungsfaktoren sowie um Schaltzeiten und dergleichen handeln.

Aufgrund der Verwendung der ersten Leitung 28 zur Übertragung der Konfigurationsdaten kann eine Konfigurierung der Aktorsteuerung 14 mittels des Konfigurations-PCs 38 erfolgen, ohne dass eine direkte physikalische Verbindung zwischen dem Konfigurations-PC 38 und der Aktorsteuerung 14 vorhanden sein muss. Die auf diese Weise ermöglichte "Remote"-Konfigurierung verringert somit den Aufwand zur Konfigurierung des Steuersystems 10.

### Bezugszeichenliste

- 10: Steuersystem
- 12: SPS
- 14: Aktorsteuerung
- 16: erster Mikroprozessor
- 18: erster Ausgang
- 20: zweiter Ausgang
- 22: Multiplexer
- 24: erste serielle Schnittstelle
- 26: Datenleitung
- 28: erste Leitung
- 30: zweiter Mikroprozessor
- 32: zweite Leitung
- 34: Verzweigung
- 36: zweite serielle Schnittstelle
- 38: Konfigurations-PC
- 40: Feldbusschnittstelle
- 42: erster Datenspeicher
- 44: zweiter Datenspeicher
- S₁: erstes digitales Signal
- S₂: zweites digitales Signal
- v: Drehgeschwindigkeit
- t: Zeit

## Patentansprüche

1. Verfahren zur Kommunikation zwischen einer speicherprogrammierbaren Steuerung (SPS) (12) und einer Aktorsteuerung (14), welche zum Betreiben eines Aktors ausgebildet ist, wobei die SPS (12) und die Aktorsteuerung (14) mittels einer ersten Leitung (28) und einer zweiten Leitung (32) elektrisch miteinander verbunden sind, und wobei
- ein erstes digitales Signal (S₁) über die erste Leitung (28) und ein zweites digitales Signal (S₂) über die zweite Leitung (32) von der SPS (12) zu der Aktorsteuerung (14) übertragen werden, wobei die digitalen Signale (S₁, S₂) jeweils zumindest einen ersten und einen zweiten Zustand aufweisen,
- mittels eines Zustands des ersten digitalen Signals (S₁) eine Bewegungsrichtung des Aktors festgelegt wird und
- mittels einer Zustandsänderung des zweiten digitalen Signals (S₂) eine Bewegung des Aktors in der Bewegungsrichtung angeordnet wird, **dadurch gekennzeichnet, dass**
- mittels Zustandsänderungen des ersten digitalen Signals (S₁) Konfigurationsdaten von der SPS (12) an die Aktorsteuerung (14) übertragen werden.

2. Verfahren nach Anspruch 1,
**dadurch gekennzeichnet, dass**
die Konfigurationsdaten dauerhaft in der Aktorsteuerung (14) gespeichert werden.

3. Verfahren nach Anspruch 1 oder 2,
**dadurch gekennzeichnet, dass**
mittels Zustandsänderungen des ersten digitalen Signals (S₁) auch Konfigurationsdaten von der Aktorsteuerung (14) an die SPS (12) übertragen werden.

4. Verfahren nach zumindest einem der vorstehenden Ansprüche,
**dadurch gekennzeichnet, dass**
eine Datenübertragung nur stattfindet, solange sich der Zustand des zweiten digitalen Signals (S₂) nicht ändert.

5. Verfahren nach zumindest einem der vorstehenden Ansprüche,
**dadurch gekennzeichnet, dass**
die Datenübertragung ausschließlich über die erste Leitung (28) erfolgt.

6. Verfahren nach zumindest einem der vorstehenden Ansprüche,
**dadurch gekennzeichnet, dass**
die Datenübertragung mittels eines Halbduplexverfahrens erfolgt.

7. Verfahren nach zumindest einem der vorstehenden Ansprüche,
**dadurch gekennzeichnet, dass**
die SPS (12) mit einem Netzwerk verbunden ist und eine Datenübertragung zwischen dem Netzwerk und der Aktorsteuerung (14) ermöglicht.

8. Speicherprogrammierbare Steuerung (SPS) (12) mit einer Schnittstelle für eine erste Leitung (28) und eine zweite Leitung (32), wobei die SPS (12) ausgebildet ist,
- ein erstes digitales Signal (S₁) über die erste Leitung (28) und ein zweites digitales Signal (S₂) über die zweite Leitung (32) zu übertragen, wobei die digitalen Signale (S₁, S₂) jeweils zumindest einen ersten und einen zweiten Zustand aufweisen,
- mittels eines Zustands des ersten digitalen Signals (S₁) eine Bewegungsrichtung eines Aktors festzulegen und
- mittels einer Zustandsänderung des zweiten digitalen Signals (S₂) eine Bewegung des Aktors in der Bewegungsrichtung anzuordnen, **dadurch gekennzeichnet, dass**
die SPS (12) ferner ausgebildet ist,
- mittels Zustandsänderungen des ersten digitalen Signals (S₁) eine Datenübertragung von Konfigurationsdaten von der SPS (12) an die Aktorsteuerung (14) durchzuführen.

9. Speicherprogrammierbare Steuerung (12) nach Anspruch 8,
**dadurch gekennzeichnet, dass**
die Schnittstelle zumindest zwei erste Leitungen (28) und zwei zweite Leitungen (32) umfasst.

10. Speicherprogrammierbare Steuerung (12) nach Anspruch 9,
**dadurch gekennzeichnet, dass**
ein Multiplexer (22) vorgesehen ist, mittels welchem eine Umschaltung zwischen einer Festlegung einer Bewegungsrichtung und einer Datenübertragung für die erste Leitung (28) oder die ersten Leitungen (28) erfolgt.

11. Aktorsteuerung (14) mit einer Schnittstelle für eine erste Leitung (28) und eine zweite Leitung (32), wobei die Aktorsteuerung (14) ausgebildet ist,
- ein erstes digitales Signal (S₁) über die erste Leitung (28) und ein zweites digitales Signal (S₂) über die zweite Leitung (32) zu empfangen, wobei die digitalen Signale (S₁, S₂) jeweils zumindest einen ersten und einen zweiten Zustand aufweisen,
- anhand eines Zustands des ersten digitalen Signals (S₁) eine Bewegungsrichtung eines Aktors festzulegen und
- anhand einer Zustandsänderung des zweiten digitalen Signals (S₂) eine Bewegung des Aktors in der festgelegten Bewegungsrichtung vorzunehmen,
**dadurch gekennzeichnet, dass**
die Aktorsteuerung (14) ferner ausgebildet ist,
- mittels Zustandsänderungen des ersten digitalen Signals (S₁) Konfigurationsdaten zu empfangen.

12. Aktorsteuerung (14) nach Anspruch 11,
**dadurch gekennzeichnet, dass**
eine Filtereinheit vorgesehen ist, die eingerichtet ist, Signale für eine Bewegungsrichtung des Aktors und empfangene Konfigurationsdaten voneinander zu trennen.

13. Aktorsteuerung (14) nach Anspruch 12,
**dadurch gekennzeichnet, dass**
die Filtereinheit einen Hochpass und/oder einen Multiplexer umfasst.

14. Steuersystem (10), umfassend eine speicherprogrammierbare Steuerung (12) und eine Aktorsteuerung (14),
**dadurch gekennzeichnet, dass**
das Steuersystem (10) das Verfahren nach zumindest einem der Ansprüche 1 bis 7 durchführt.

## Claims

1. A method for communication between a programmable logic controller (PLC) (12) and an actuator control (14) which is configured to operate an actuator, wherein the PLC (12) and the actuator control (14) are electrically connected to one another by means of a first line (28) and a second line (32); and wherein
- a first digital signal (S₁) is transmitted via the first line (28) and a second digital signal (S₂) is transmitted via the second line (32) from the PLC (12) to the actuator control (14), with the digital signals (S₁, S₂) each having at least a first state and a second state,
- a direction of movement of the actuator is specified by means of a state of the first digital signal (S₁) and
- a movement of the actuator is commanded in the direction of movement by means of a state change of the second digital signal (S₂), **characterized in that**
- configuration data are transmitted from the PLC (12) to the actuator control (14) by means of state changes of the first digital signal (S₁).

2. A method in accordance with claim 1,
**characterized in that**
the configuration data are permanently stored in the actuator control (14).

3. A method in accordance with claim 1 or claim 2,
**characterized in that**
configuration data are also transmitted from the actuator control (14) to the PLC (12) by means of state changes of the first digital signal (S₁).

4. A method in accordance with at least one of the preceding claims,
**characterized in that**
a data transmission only takes place as long as the state of the second digital signal (S₂) does not change.

5. A method in accordance with at least one of the preceding claims,
**characterized in that**
the data transmission takes place solely via the first line (28).

6. A method in accordance with at least one of the preceding claims,
**characterized in that**
the data transmission takes place by means of a half-duplex process.

7. A method in accordance with at least one of the preceding claims,
**characterized in that**
the PLC (12) is connected to a network and enables a data transmission between the network and the actuator control (14).

8. A programmable logic controller (PLC) (12) having an interface for a first line (28) and a second line (32), wherein the PLC (12) is configured
- to transmit a first digital signal (S₁) via the first line (28) and a second digital signal (S₂) via the second line (32), with the digital signals (S₁, S₂) each having at least a first state and a second state,
- to specify a direction of movement of an actuator by means of a state of the first digital signal (S₁) and
- to command a movement of the actuator in the direction of movement by means of a state change of the second digital signal (S₂), **characterized in that**
the PLC (12) is further configured
- to carry out a data transmission of configuration data from the PLC (12) to the actuator control (14) by means of state changes of the first digital signal (S₁).

9. A programmable logic controller (12) in accordance with claim 8,
**characterized in that**
the interface comprises at least two first lines (28) and two second lines (32).

10. A programmable logic controller (12) in accordance with claim 9,
**characterized in that**
a multiplexer (22) is provided by means of which a switchover takes place between a specification of a direction of movement and a data transmission for the first line (28) or the first lines (28).

11. An actuator control (14) having an interface for a first line (28) and a second line (32), wherein the actuator control (14) is configured
- to receive a first digital signal (S₁) via the first line (28) and a second digital signal (S₂) via the second line (32), with the digital signals (S₁, S₂) each having at least a first state and a second state,
- to specify a direction of movement of an actuator based on a state of the first digital signal (S₁) and
- to perform a movement of the actuator in the specified direction of movement based on a state change of the second digital signal (S₂),
**characterized in that**
the actuator control (14) is further configured
- to receive configuration data by means of state changes of the first digital signal (S₁).

12. An actuator control (14) in accordance with claim 11,
**characterized in that**
a filter unit is provided which is adapted to separate signals for a direction of movement of the actuator and received configuration data from one other.

13. An actuator control (14) in accordance with claim 12,
**characterized in that**
the filter unit comprises a high-pass filter and/or a multiplexer.

14. A control system (10) comprising a programmable logic controller (12) and an actuator control (14),
**characterized in that**
the control system (10) carries out the method in accordance with at least one of the claims 1 to 7.

## Revendications

1. Procédé de communication entre un automate programmable industriel (API) (12) et une commande d'actionneur (14) qui est réalisée pour faire fonctionner un actionneur,
dans lequel
l'API (12) et la commande d'actionneur (14) sont reliés électriquement l'un à l'autre au moyen d'une première ligne (28) et d'une seconde ligne (32), et
- un premier signal numérique (S₁) est transmis via la première ligne (28) et un second signal numérique (S₂) est transmis via la seconde ligne (32) depuis l'API (12) à la commande d'actionneur (14), les signaux numériques (S₁, S₂) présentant chacun au moins un premier et un second état,
- une direction de mouvement de l'actionneur est définie au moyen d'un état du premier signal numérique (S₁), et
- un mouvement de l'actionneur dans la direction du mouvement est imposé au moyen d'un changement d'état du second signal numérique (S₂), **caractérisé en ce que**
- des données de configuration sont transmises de l'API (12) à la commande d'actionneur (14) au moyen de changements d'état du premier signal numérique (S₁).

2. Procédé selon la revendication 1,
**caractérisé en ce que**
les données de configuration sont mémorisées en permanence dans la commande d'actionneur (14).

3. Procédé selon la revendication 1 ou 2,
**caractérisé en ce que**
des données de configuration sont transmises également de la commande d'actionneur (14) à l'API (12) au moyen de changements d'état du premier signal numérique (S₁).

4. Procédé selon l'une au moins des revendications précédentes,
**caractérisé en ce que**
une transmission de données n'a lieu que tant que l'état du second signal numérique (S2) ne change pas.

5. Procédé selon l'une au moins des revendications précédentes,
**caractérisé en ce que**
la transmission de données s'effectue exclusivement via la première ligne (28).

6. Procédé selon l'une au moins des revendications précédentes,
**caractérisé en ce que**
la transmission de données s'effectue au moyen d'une méthode à l'alternat (half-duplex).

7. Procédé selon l'une au moins des revendications précédentes,
**caractérisé en ce que**
l'API (12) est relié à un réseau et permet une transmission de données entre le réseau et la commande d'actionneur (14).

8. Automate programmable industriel (API) (12) comportant une interface pour une première ligne (28) et pour une seconde ligne (32), l'API (12) étant réalisé pour
- transmettre un premier signal numérique (S₁) via la première ligne (28) et pour transmettre un second signal numérique (S₂) via la seconde ligne (32), les signaux numériques (S₁, S₂) présentant chacun au moins un premier et un second état,
- définir une direction de mouvement d'un actionneur au moyen d'un état du premier signal numérique (S₁), et
- imposer un mouvement de l'actionneur dans la direction de mouvement au moyen d'un changement d'état du second signal numérique (S₂),
**caractérisé en ce que**
l'API (12) est en outre réalisé pour
- effectuer une transmission de données de configuration de l'API (12) à la commande d'actionneur (14) au moyen de changements d'état du premier signal numérique (S₁).

9. Automate programmable industriel (12) selon la revendication 8,
**caractérisé en ce que**
l'interface comprend au moins deux premières lignes (28) et deux secondes lignes (32).

10. Automate programmable industriel (12) selon la revendication 9,
**caractérisé en ce que**
il est prévu un multiplexeur (22) à l'aide duquel s'effectue une commutation entre une définition d'une direction de mouvement et une transmission de données pour la première ligne (28) ou pour les premières lignes (28).

11. Commande d'actionneur (14) comportant une interface pour une première ligne (28) et pour une seconde ligne (32), la commande d'actionneur (14) étant réalisée pour
- recevoir un premier signal numérique (S₁) via la première ligne (28) et pour recevoir un second signal numérique (S₂) via la seconde ligne (32), les signaux numériques (S₁, S₂) présentant chacun au moins un premier et un second état,
- définir une direction de mouvement de l'actionneur en se basant sur un état du premier signal numérique (S₁), et
- effectuer un mouvement de l'actionneur dans la direction de mouvement définie en se basant sur un changement d'état du second signal numérique (S₂),
**caractérisée en ce que**
la commande d'actionneur (14) est en outre réalisée pour
- recevoir des données de configuration au moyen de changements d'état du premier signal numérique (S₁).

12. Commande d'actionneur (14) selon la revendication 11,
**caractérisée en ce que**
il est prévu une unité de filtrage qui est conçue pour séparer mutuellement des signaux, destinés à une direction de mouvement de l'actionneur, et des données de configuration reçues.

13. Commande d'actionneur (14) selon la revendication 12,
**caractérisée en ce que**
l'unité de filtrage comprend un filtre passe-haut et/ou un multiplexeur.

14. Système de commande (10), comportant un automate programmable industriel (12) et une commande d'actionneur (14),
**caractérisé en ce que**
le système de commande (10) met en œuvre le procédé selon l'une des revendications 1 à 7.
